Europäisches Patentamt

European Patent Office

Office européen des brevets

(11) Veröffentlichungsnummer: **0 210 479 B1**

## EUROPÄISCHE PATENTSCHRIFT

(45) Veröffentlichungstag der Patentschrift: **20.05.92**

(21) Anmeldenummer: **86109280.7**

(22) Anmeldetag: **08.07.86**

(51) Int. Cl.⁵: **B01D 21/00**, C02F 1/48, B03C 1/00

(54) Verfahren zur verbesserten Trennung der Klärflüssigkeit von der Biomasse bei der biologischen Abwasserreinigung.

(30) Priorität: **23.07.85 DE 3526183**

(43) Veröffentlichungstag der Anmeldung:
**04.02.87 Patentblatt 87/06**

(45) Bekanntmachung des Hinweises auf die Patenterteilung:
**20.05.92 Patentblatt 92/21**

(84) Benannte Vertragsstaaten:
**AT BE CH DE FR GB IT LI NL SE**

(56) Entgegenhaltungen:
**DE-A- 3 402 698**
**US-A- 3 351 203**
**US-A- 3 697 420**
**US-A- 3 951 799**
**US-A- 4 115 534**

(73) Patentinhaber: **BAYER AG**

**W-5090 Leverkusen 1 Bayerwerk(DE)**

(72) Erfinder: **Reischl, Artur, Dr.**
**H.T.-von-Böttinger-Strasse 19**
**W-5090 Leverkusen 1(DE)**
Erfinder: **Henkel, Hanno, Dr.**
**Bodelschwinghstrasse 21**
**W-4150 Krefeld(DE)**
Erfinder: **Sahlmen, Friedhelm**
**Asberger Strasse 157**
**W-4130 Moers 1(DE)**

EP 0 210 479 B1

## Beschreibung

Die Erfindung betrifft ein Verfahren zur verbesserten Trennung der Klärflüssigkeiten von der Biomasse bzw. der Abscheidung von Klärschlämmen bei der (aeroben und/oder anaeroben) biologischen Abwasserreinigung, die mit Hilfe von magnetisch abscheidbaren Stoffen als Träger(massen) durchgeführt wird, wobei bei der ausschließlichen Verwendung magnetisch abscheidbarer anorganischer Stoffe, bezogen auf die Belebtschlammtrockenmasse 1 bis 150 Gew.-% an magnetisch abscheidbaren anorganischen Stoffen eingesetzt werden.

Als magnetisch abscheidbare Stoffe werden Oxide oder Mischoxide von Schwermetallen, bevorzugt Eisenoxide wie $Fe_3O_4$ (Magnetit) und $\gamma$-$Fe_2O_3$ eingesetzt, die in mittleren Korngrößen <50 $\mu$m, bevorzugt <10 $\mu$m, besonders bevorzugt <3 $\mu$m, z.B. 0,1 bis 1 $\mu$m, Verwendung finden.

Mittels dieser magnetischen Träger wird eine verbesserte Sedimentation der diese magnetische Stoffe enthaltenden Biomassen bei der biologischen Abwasserreinigung erzielt.

Bei der Herstellung von Eisenoxidpigmenten fällt in großer Menge als Zwangsanfallprodukt magnetisches Eisenoxid $Fe_3O_4$ (Magnetit) in einer Korngröße zumeist unter 3 $\mu$m an, das für die erfindungsgemäße Anwendung besonders geeignet ist und einen ökologisch wichtigen Zweck erfüllt.

In biologischen Kläranlagen wird die biologische Abwasserreinigung aerob und anaerob mit Hilfe von Mikroorganismen durchgeführt, wobei die organischen Verunreinigungen des Abwassers eliminiert werden. Unter den dabei sich vollziehenden Stoffwechselvorgängen erfolgt eine starke Vermehrung der Mikroorganismen.

In der Praxis findet überwiegend das sogenannte Belebungsverfahren für den aeroben und/oder anoxischen Reinigungsprozeß mit Durchlaufbetrieb Anwendung. Beim Durchlaufbetrieb werden Abwasser und belebter Schlamm dem Belebungsbecken zugeleitet, wo sich beim aeroben oder anoxischen Verfahren bei ständiger Sauerstoffzufuhr die biochemischen Prozesse vollziehen. Die Sauerstoffzufuhr wird so vorgenommen, daß gleichzeitig eine hohe Turbulenz im Belebungsbecken erzeugt wird, so daß eine optimale Vermischung von Abwasser und Belebtschlamm erfolgt. Entsprechend dem Zulauf fließt das Abwasser-Belebtschlammgemisch aus dem Belebungsbecken in Zwischen- oder Nachklärbecken, in welchem sich der Belebtschlamm von dem gereinigten Abwasser trennt. Zur Aufrechterhaltung einer größtmöglichen Belebtschlammkonzentration im Belebungsbecken wird der größte Teil des in den Zwischen- oder Nachklärbecken abgesetzten Belebtschlammes wieder zurückgeführt um erneut biologische Reinigungsarbeit zu leisten. Nur der durch Vermehrung der Mikroorganismen gebildete Überschußbelebtschlamm wird dem System entnommen und der Klärschlammentsorgung zugeführt.

Der Belebtschlamm befindet sich größtenteils also ständig im Kreislauf. Die Trennung von Abwasser und Belebtschlamm in den Nachklärbecken ist jedoch problematisch, da der Belebtschlamm oft besonders leicht und deshalb nur sehr langsam oder sogar unvollständig absetzbar ist. Ein hoher Absetzeffekt und damit die fast vollständige Rückführung des belebten Schlammes sind Voraussetzungen zur Sicherung des erforderlichen Reinigungsgrades und damit der Einhaltung von behördlich festgelegten Grenzwerten.

Für die Bemessung der Zwischen- und Nachklärbecken ist es üblich, Aufenthaltszeiten anzugeben, die zwischen 2 und 4 Stunden liegen. Bei einem durch die Aufenthaltszeit vorgegebenen Beckenvolumen kann ein hoher Wirkungsgrad jedoch nur dann erreicht werden, wenn auch die Abmessungen der Nachklärbecken im Hinblick auf den Absetzvorgang des belebten Schlammes optimal gewählt sind.

Bestimmende Bemessungsgrößen sind durch die Länge, Breite bzw. Tiefe und Durchmesser des Nachklärbeckens festgelegt und damit zwangsläufig auch das Beckenvolumen. Durch die Flächenbeschickung m/h ($m^3$ Abwasser/$m^2$ Oberfläche . h) sind die Dimensionen gekennzeichnet. Die Flächenbeschickung der Nachklärbecken muß auf jeden Fall kleiner sein als die Sinkgeschwindigkeit des belebten Schlammes.

Der zulässige Grenzwert für die Flächenbeschickung der Nachklärung wird letzlich jedoch durch Beschaffenheit und Menge des mit dem Abwasser eingeleiteten Schlammes bestimmt.

Als Kenngröße für das Absetzverhalten wird der Schlammindex (Isv) herangezogen, welcher angibt, wie groß das Volumen ($V_s$) von 1 g Schlammtrockensubstanz ($TS_R$) nach einer Absetzzeit von 30 Minuten ist.

$$I_{sv} = \frac{V_s}{TS_R} = \frac{ml}{g}$$

Bei richtig dimensionierten Becken kann im allgemeinen bei einem Schlammindex von <100 ml/g eine gute Absetzwirkung erzielt werden. Wenn jedoch infolge hoher Feststoffbelastungen und insbesondere durch Blähschlammbildung die Situation des behinderten Absetzens vorherrscht, kommt es zum Aufschwimmen und Abtrieb von Belebtschlamm.

Die Absetzvorgänge werden erheblich behindert beginnend bei einem Schlammindex >150 ml/g. Es sind verschiedene Ursachen für diese Erhöhung bekannt; z.B. Einschluß von spezifisch leichten Stoffen wie Fette etc. in den Belebtschlamm, Auftrieb durch anhängende Gasblasen, insbesondere bei Denitrifikationsvorgängen, ganz besonders aber die Bildung von Blähschlamm durch fadenförmige Organismen die sich in größerer Zahl entwickeln.

Diese Erscheinung ist besonders schwerwiegend, nämlich durch die Erhöhung der absetzbaren Stoffe im Ablauf der Kläranlage, die ein zigfaches des behördlich maximal festgelegten Grenzwertes von 0,5 ml/l erreichen kann und durch die Verarmung des Systems an biologisch aktivem Schlamm, der die Reinigungsleistung in ganz entscheidendem Maße vermindert.

Zur Verbesserung des Absetzverhaltens von Belebtschlämmen und zur Bekämpfung von Blähschlamm sind in der Literatur - s. Lehr- und Handbuch der Abwassertechnik Band II zweite Auflage - und Korrespondenz Abwasser Heft 4, 1985 - wie z.B. Schädigung der fadenförmigen Mikroorganismen durch Chlor oder Wasserstoffsuperoxid, verfahrenstechnische Änderungen, Beschwerung des belebten Schlammes durch Vorklärschlamm, Zugabe von Kalk und/oder von Eisen- bzw. Aluminiumsalzen beschrieben.

Allen diesen Maßnahmen haftet der Nachteil an, daß sie entweder, wenn überhaupt, nur zu Teilerfolgen führen, oder erst nach längerer Behandlungszeit Wirkung zeigen, oder wirtschaftlich einen extrem hohen Aufwand erfordern oder bei der nachgeschalteten Klärschlammentsorgung Nachteile beinhalten.

Überraschenderweise wurde nun gefunden, daß man diese Nachteile bei der biologischen Abwasserreinigung vermeiden kann, indem man magnetisch abscheidbare Stoffe mitverwendet, die als Trägermaterialien ein rasches Absinken des gesamten Belebtschlammes ermöglichen. Darüber hinaus gelingt es durch Zusatz dieser magnetisch abscheidbaren Stoffe eine deutlich höhere Belebtschlammkonzentration und damit höhere Durchsatzleistungen in den Belebungsbecken und den Nachklärbecken zu erzielen.

Die Verwendung alkalisch vorbehandelter Magnetit-Partikel zur Beseitigung von Färbungen und Trübungen aus Flußwasser in Wasserwerken wird in L. O. Kolarik, Water Research, Volume 17, S. 141-147 (1984) beschrieben. Eine Regeneration des Magnetits erfolgte durch Ansäuern (Abgabe der absorbierten Teilchen) und anschließender Alkalibehandlung (Magnetitteilchen werden wieder positiv geladen und aktiv). Unbehandeltes Magnetit erwies sich als praktisch unwirksam für die Flußwasseraufbereitung.

Ähnliche Wasserreinigungsverfahren werden von C. de Latour und H. K. Holm im Journal of the American Waterworks Association, Juni 1977, S. 325-327, beschrieben. Andere Wasserreinigungsverfahren mit Magnetit betreffen die Entfernung von Algen durch Absorption mit Magnetit in Gegenwart von Ferrichlorid (R. Yadidia et al., Environmental Science and Technology, Vol. 11, Nr. 9, S. 913-916, 1977).

Die US-A-3 697 420 betrifft ein Verfahren zur Abscheidung biologischer Klärschlämme mit Hilfe von polyelektrolytischen Koagulierungsmitteln unter dem Einfluß magnetischer Felder und Mitverwendung von weighting agents, darunter gekörntes Eisenerz und Magnetit.

Diese Patentschrift lehrt, s. Spalte 2, Z. 55 - 72, daß für die Sedimentation ohne magnetisches Feld, nur gröbere Korngrößen von 50 - 100 mesh (US Standard Screens) geeignet sind. Bei magnetischer Agglomerierung und/oder magnetischer Abtrennung ist auch feineres Material, z.B. Magnetit <325 mesh, geeignet (50 - 100 mesh = 149 - 297 $\mu$m; 325 mesh = 45 $\mu$m).

Gegenstand der Erfindung ist ein Verfahren zur verbesserten Trennung der Klärflüssigkeit von der Biomasse bei der biologischen Abwasserreinigung, dadurch gekennzeichnet, daß man in der Klärflüssigkeit die Biomassen mit magnetisch abscheidbaren, anorganischen Stoffen mit Teilchengrößen unter 50 $\mu$m in Mengen von 1 bis 150 Gew.-%, bezogen auf die Belebtschlamm-Trockenmasse, einsetzt und man die Biomassen mit diesen Zusätzen sedimentiert und dadurch die Trennung bewirkt.

Insbesondere werden in dem Verfahren magnetisch abscheidbare anorganische Stoffe (vorzugsweise Magnetit) mit der Biomasse in der Klärflüssigkeit der Belebungsstufe vereinigt, durchmischt und in separaten Absetzbehältern sedimentiert.

Das Verfahren wird in einer besonderen Ausführungsform derart durchgeführt, daß von der Mischung der Biomasse und den magnetisch abscheidbaren anorganischen Stoffen (vorzugsweise Magnetit) nur ein Teil, vorzugsweise entsprechend der Belebtschlamm-Überschußmenge, durch Sedimentation irreversibel entfernt, gegebenenfalls entwässert und entsorgt wird, z.B. durch Verbrennung oder Deponieren und man dann den anderen zumeist größeren Teil in eine Belebungsstufe zurückführt.

Das Verfahren kann insbesondere Anwendung finden als Entstörungsmaßnahme beim Auftreten von Blähschlamm. Hierbei wird im einfachsten Falle Magnetit ($Fe_3O_4$) mit einer Korngröße von <50 $\mu$m, bevorzugt <10 $\mu$, in einer Menge von etwa 1-150 Gew.-%, bevorzugt 10-50 Gew.-%, bezogen auf die Belebtschlamm-Trockensubstanz, in das Belebungsbecken oder Nachklärbecken zugegeben, wobei nach Durchmischung der Blähschlamm nicht mehr aufschwimmt, sondern beschleunigt absinkt.

Die Vorteile bei der Entstörungsmaßnahme liegen auf der Hand. Es kann durch den Zusatz von Magnetit innerhalb kurzer Zeit der Schlamm so günstig beeinflußt werden, daß ein Aufschwimmen von Belebtschlamm mit Sicherheit verhindert wird und damit die Grenzwerte für die absetzbaren Stoffe am Ablauf der Kläranlage eingehalten werden.

Bei diesem Anwendungsfall gelingt es nicht nur durch Zurückhalten der Biomasse die Reinigungsleistung zu garantieren, sondern durch mehrfache Erhöhung der aktiven Biomassen im Belebungsbecken eine deutliche Steigerung der Durchsatzleistung zu erzielen und durch die Sedimentationsbeschleunigung überlastete Nachklärbecken optimal zu nutzen.

Die erfindungsgemäßen Vorteile sind im wesentlichen zu sehen in der Erhöhung der Betriebssicherheit und der Durchsatzleistung.

Im Falle der Verwendung von anorganischen, magnetisch abscheidbaren Verbindungen, die sich irreversibel mit dem Belebtschlamm vereinigt haben, wird bei der nachfolgenden Schlammentwässerung des Überschußbelebtschlammes eine deutlich verbesserte Schlammentwässerung unter Einsparung von Flockungshilfsmitteln erreicht.

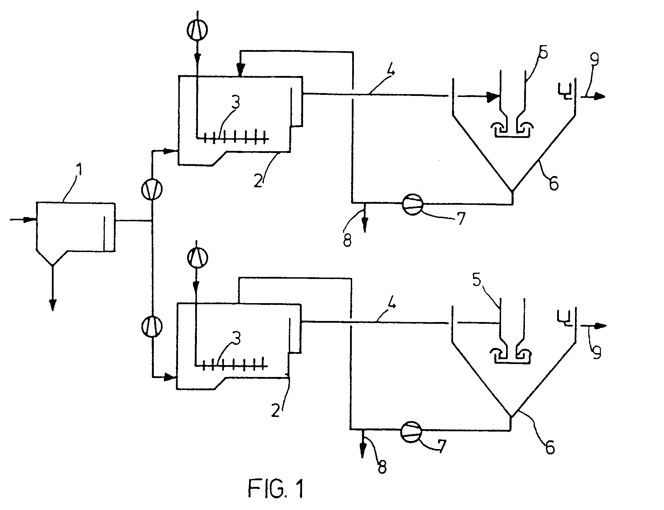

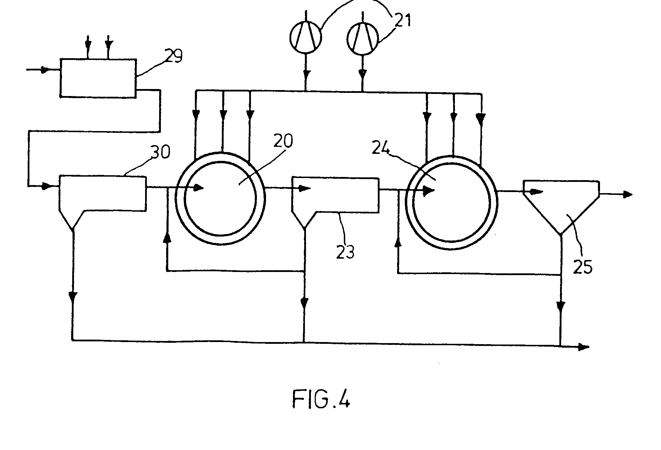

Patentbeispiel 1 (Figur 1)

Zwei parallel laufende halbtechnische Versuchskläranlagen, wobei die eine ohne Träger als Vergleichsversuch (Nulltest), die andere als erfindungsgemäßer Versuch mit magnetisch abscheidbarem Trägermaterial betrieben werden, bestehend aus Vorklärung 1,5 m³ Inhalt, Belebungsstufe 2,6 m³ Inhalt und Nachklärung 1,3 m³ Inhalt. Beide Anlagen werden mit Belebtschlamm einer Industriekläranlage, die durch Blähschlammbildung gekennzeichnet war, gefüllt und mit einem repräsentativen Abwasserstrom betrieben.

Aus dem Vorklärbecken (1) wird kontinuierlich das Belebungsbecken (2) mit 430 l/h Abwasser entsprechend einer Verweilzeit von 6 Stunden beschickt. Die Sauerstoffversorgung wird über perforierte Rohre (3), am Beckenboden angeordnet, vorgenommen.

Das Belebtschlamm-Abwasser-Gemisch wird über Leitung (4) dem Entgasungszyklon (5) zugeführt und in das Nachklärbecken (6) eingeleitet. Der Schlammrücklauf erfolgt mit der Pumpe (7) in das Belebungsbecken (2). Über den Bypaß (8) wird der Überschußschlamm abgezogen. Das gereinigte Abwasser verläßt über die Ablaufrinne (9) die Nachklärung.

Versuchsanlage I wird ohne Magnetit, Versuchsanlage II wird erfindungsgemäß mit 10 1 einer 29 gew.-%igen Magnetit-Suspension betrieben. Daraus ergibt sich eine Magnetit-($Fe_3O_4$)-Konzentration von 20 Gew.-% bezogen auf die Belebtschlamm-Trockenmasse.

4

In der nachfolgenden Tabelle 1 sind die Meßergebnisse zusammengefaßt.

Tabelle 1 zu Beispiel 1

| | n. 6 Stunden Anlage | | 1.Tag | | 2.Tag | | 3.Tag | | 5.Tag | | 7.Tag | | 10.Tag | | 12.Tag | |
| --- | --- | --- | --- | --- | --- | --- | --- | --- | --- | --- | --- | --- | --- | --- | --- | --- |
| | I | II | I | II | I | II | I | II | I | II | I | II | I | II | I | II |
| **Mess. im Belb. B.** | | | | | | | | | | | | | | | | |
| Zulaufmenge l/h | 430 | 430 | 430 | 430 | 430 | 430 | 430 | 430 | 430 | 430 | 430 | 430 | 430 | 430 | 430 | 430 |
| Verweilzeit h | 6 | 6 | 6 | 6 | 6 | 6 | 6 | 6 | 6 | 6 | 6 | 6 | 6 | 6 | 6 | 6 |
| $O_2$-Gehalt ge-  mg/l löst in wäßriger Phase | 2,8 | 2,7 | 2,4 | 2,5 | 2,3 | 2,4 | 2,9 | 2,8 | 2,7 | 3,1 | 3,2 | 3,4 | 3,6 | 3,5 | 2,9 | 2,8 |
| Schlammvolumen ml/g nach 30 min. | 1000 | 370 | 980 | 340 | 970 | 320 | 950 | 330 | 970 | 350 | 1000 | 370 | 1000 | 360 | 970 | 340 |
| Absetzzeit Gehalt an  g/l Trockensubstanz | 4,1 | 5,1 | 3,9 | 4,9 | 3,9 | 4,8 | 3,6 | 4,7 | 3,5 | 4,6 | 3,3 | 4,2 | 2,9 | 4,3 | 3,0 | 4,1 |
| Schlammindex ml/g | 244 | 73 | 251 | 69 | 249 | 67 | 264 | 70 | 277 | 76 | 303 | 88 | 344 | 84 | 323 | 82 |
| **Mess. im Ablauf Nachkl.** | | | | | | | | | | | | | | | | |
| Absetzbare  ml/l Stoffe nach 2 Stunden | 32 | 0,3 | 44 | 0,2 | 47 | 0,1 | 62 | 0,2 | 48 | 0,2 | 42 | 0,1 | 51 | 0,2 | 50 | 0,1 |
| Schwebestoffe mg/l in der überstehenden Phase | 372 | 176 | 326 | 90 | 364 | 56 | 418 | 90 | 326 | 82 | 318 | 52 | 382 | 86 | 366 | 66 |
| CSB-Elimination % (homogen.Probe) | 84 | 95 | 82 | 94 | 86 | 94 | 82 | 94 | 80 | 96 | 82 | 94 | 78 | 95 | 80 | 95 |

Nulltest Anlage I ohne $Fe_3O_4$ (als Vergleich)

Erfindungsgemäßer Versuch Anlage II mit $Fe_3O_4$ (Magnetit)

Patentbeispiel 4 (Figur 4)
(Biologische zweistufige Abwasserreinigung einer Industriekläranlage)

Das neutralisierte und mechanisch vorgeklärte Abwasser wird der Belebung (20) zugeführt. Bei einem Beckenvolumen von 6000 m$^3$ und einer Zulaufmenge von 600-700 m$^3$/h ergibt sich in den Belebungsbecken eine mittlere Verweilzeit von 8-10 Stunden. Der für die Stoffwechselvorgänge benötigte Sauerstoff wird über die Gebläse (21) durch am Beckenboden befindliche Ejektoren gemeinsam mit dem Abwasserschlammgemisch als Luftsauerstoff zugeführt.

In der nachfolgenden Zwischenklärung (23) trennt sich der Belebtschlamm bei einer mittleren Verweilzeit von 3 Stunden vom teilgereinigten Abwasser. Der Belebtschlamm wird durch Räumerbalken in Trichter transportiert und größtenteils in das Belebungsbecken (20) der 1. Stufe zurückgeführt. Der Überschußbelebtschlamm aus der Mikroorganismen-Vermehrung gebildet, wird zur Klärschlammbeseitigung gegeben.

Das teilgereinigte Abwasser fließt von der Zwischenklärung (23) in die 2. Belebungsstufe (24) um dort bei einer mittleren Verweilzeit von 11-13 Stunden biologisch nachgereinigt zu werden. Der Sauerstoffeintrag erfolgt wie in der 1. Belebungsstufe. Das Belebtschlamm-Abwassergemisch der 2. Belebungsstufe (24) gelangt in die Nachklärung (25) die als Trichterbecken (Dortmundbrunnen) ausgebildet sind, um die Trennung des Belebtschlammes vom nun vollbiologisch gereinigten Abwasser vorzunehmen.

In dieser 2-stufigen Industriekläranlage (s. Fließschema) bestehend aus 2 Straßen mit jeweils Neutralisation, Vorklärung, Belebung Stufe I, Zwischenklärung, Belebung Stufe II und Nachklärung, die bei beiden Straßen gleich groß dimensioniert sind und gleichartig betrieben wurden, kam es in beiden Straßen zur Blähschlammbildung und zu Schlammabtrieb aus den Nachklärbecken.

Entsprechend den halbtechnischen Versuchen, den Blähschlamm durch Zugabe von magnetischem Eisenoxidschlamm wirksam zu beschweren und damit zu sedimentieren, wird zunächst versuchsweise in eine Straße in das 2. Belebungsbecken mit 8000 m$^3$ Inhalt Eisenoxidsuspension $Fe_3O_4$ in einer Menge von 20 m$^3$ als 25 %ige Suspension entsprechend 20 Gew.-% $Fe_3O_4$ bezogen auf die Belebtschlamm-Trockensubstanz zugesetzt. Bereits nach 4 Stunden kann am Ablauf der Trichterbecken eine Klarphase erkannt werden, so daß kein Schlamm mehr abgetrieben wird, während in der Vergleichsstraße (ohne Magnetit) weiterhin Blähschlamm ausgetragen wird.

Die vergleichenden Meßdaten beim Vorhandensein von Blähschlamm zwischen der Straße ohne Zugabe von Eisenoxidschlamm und mit Eisenoxidschlamm sind in folgender Tabelle 3 zusammengestellt.

Tabelle 3 zu Beispiel 4

| | n. 4 Stunden Anlage | | 1.Tag | | 2.Tag | | 3.Tag | | 5.Tag | | 7.Tag | | 10.Tag | | 12.Tag | |
|---|---|---|---|---|---|---|---|---|---|---|---|---|---|---|---|---|
| | I | II | I | II | I | II | I | II | I | II | I | II | I | II | I | II |
| **Messungen im Belebungsbecken der 2. Stufen** | | | | | | | | | | | | | | | | |
| Zulaufmenge l/h | 610 | 610 | 670 | 670 | 670 | 670 | 675 | 675 | 695 | 695 | 700 | 640 | 640 | 640 | 630 | 630 |
| Verweilzeit h | 13,1 | 13,1 | 11,9 | 11,9 | 11,9 | 11,1 | 11,8 | 11,8 | 11,5 | 11,5 | 11,4 | 11,4 | 12,5 | 12,5 | 12,7 | 12,7 |
| O$_2$-Gehalt gelöst in wäßriger Phase mg/l | 2,5 | 2,7 | 2,1 | 2,5 | 2,4 | 2,5 | 2,7 | 2,8 | 2,5 | 2,7 | 2,9 | 2,8 | 2,7 | 3,4 | 2,9 | 2,9 |
| Schlammvolumen ml/l nach 30 min. Absetzzeit | 990 | 540 | 980 | 390 | 960 | 400 | 970 | 360 | 970 | 370 | 950 | 360 | 980 | 340 | 970 | 360 |
| Gehalt an Trockensubstanz g/l | 3,9 | 4,4 | 4,2 | 4,5 | 4,1 | 4,4 | 3,8 | 4,3 | 3,7 | 4,1 | 3,8 | 4,1 | 3,6 | 4,0 | 3,5 | 3,8 |
| Schlammindex ml/g | 254 | 123 | 233 | 87 | 234 | 91 | 255 | 84 | 262 | 90 | 250 | 88 | 272 | 85 | 277 | 95 |
| **Mess. im Ablauf Nachkl.** | | | | | | | | | | | | | | | | |
| Absetzbare Stoffe nach 2 Stunden ml/l | 45 | 0,2 | 42 | 0,1 | 47 | 0,1 | 58 | 0,2 | 43 | 0,1 | 51 | 0,1 | 48 | 0,1 | 50 | 0,2 |
| Schwebestoffe in der überstehenden Phase mg/l | 302 | 102 | 308 | 56 | 338 | 76 | 376 | 74 | 214 | 76 | 304 | 72 | 274 | 82 | 268 | 88 |
| CSB-Elimination (homogen,Probe) % | 86 | 95 | 80 | 96 | 78 | 95 | 82 | 95 | 80 | 94 | 82 | 93 | 81 | 93 | 84 | 96 |
| Schlammspiegel (gemessen ab Wasseroberfläche) m | 0 | 5,80 | 0 | 5,60 | 0 | 6,20 | 0 | 6,10 | 0 | 5,60 | 0 | 6,00 | 0 | 5,90 | 0 | 5,90 |

Biologische zweistufige Abwasserreinigung einer Großanlage bestehend aus zwei Parallelstraßen.
Straße I  Vergleichsstraße ohne Magnetit
Straße II  erfindungsgemäß mit Magnetit

Bei diesen hervorragenden Ergebnissen der Blähschlammsedimentation wurde die 2. Straße der 2. Belebungsstufe ebenfalls mit 20 m$^3$ Eisenoxidschlamm versetzt und dadurch die gleichen guten Ergebnisse erzielt.

Als bedeutender Nebeneffekt wurde bei der nachfolgenden Klärschlammentwässerung - die nach Zugabe von Polyelektrolyten über Siebbandpressen erfolgt - eine ca. 30 %ige Einsparung an Polyelektrolyten erreicht.

**Patentansprüche**

1. Verfahren zur verbesserten Trennung der Klärflüssigkeit von der Biomasse bei der biologischen Abwasserreinigung, dadurch gekennzeichnet, daß man in der Klärflüssigkeit die Biomassen mit magnetisch abscheidbaren, anorganischen Stoffen mit Teilchengrößen unter 50 $\mu$m in Mengen von 1 bis 150 Gew.-%, bezogen auf die Belebtschlamm-Trockenmasse, einsetzt und man die Biomassen mit diesen Zusätzen sedimentiert und dadurch die Trennung bewirkt.

2. Verfahren nach Anspruch 1, dadurch gekennzeichnet, daß man magnetisch abscheidbare anorganische Stoffe mit der Biomasse in der Klärflüssigkeit der Belebungsstufe vereinigt, durchmischt und in separaten Absetzbehältern sedimentiert.

3. Verfahren nach einem der Ansprüche 1 oder 2, dadurch gekennzeichnet, daß man von der Mischung der Biomasse und den magnetisch abscheidbaren anorganischen Stoffen nur einen Teil, vorzugsweise entsprechend der Belebtschlamm-Überschußmenge durch Sedimentation entfernt, gegebenenfalls entwässert und entsorgt und den größerenTeil in eine Belebungsstufe zurückführt.

4. Verfahren nach einen, der Ansprüche 1 bis 3, dadurch gekennzeichnet, daß man als magnetisch abscheidbaren anorganischen Stoff Magnetit einsetzt.

5. Verfahren nach einem der Ansprüche 1 bis 4, dadurch gekennzeichnet, daß Magnetit mit einer Teilchengröße unter 10 $\mu$m eingesetzt wird.

**Claims**

1. A method of improved separation of the clarified liquid from the biomass during biological purification of waste water, characterised in that the biomass, together with magnetically separable inorganic substances with particle sizes below 50 $\mu$m, is used in quantities of 1 to 150% by weight of the dry weight of activated sludge, and these additives are used to deposit and thus separate the biomass.

2. A method according to claim 1, characterised in that magnetically separable inorganic substances are combined with the biomass in the clarified liquid in the activation stage, and are thoroughly mixed and deposited in separate settling tanks.

3. A method according to claim 1 or 2, characterised in that only a part of the mixture of the biomass and the magnetically separable inorganic substances, preferably a part corresponding to the excess amount of activated sludge, is removed by sedimentation, optionally dewatered and disposed of, whereas the major part is returned to an activation stage.

4. A method according to any of claims 1 to 3, characterised in that the magnetically separable inorganic substance used is magnetite.

5. A method according to any of claims 1 to 3, characterised in that magnetite with a particle size less than 10 $\mu$m is used.

**Revendications**

1. Procédé pour la séparation améliorée entre le liquide clarifié et la biomasse lors de la purification biologique des eaux usées, **caractérisé en ce qu'**on charge dans le liquide clarifié, les biomasses à l'aide de substances inorganiques séparables par voie magnétique et ayant des granulométries inférieures à 50 $\mu$m, dans des quantités de 1 à 150% en poids rapportées à la masse sèche de boues activées et on sédimente les biomasses avec ces additifs et ainsi, on réalise la séparation.

2. Procédé selon la revendication 1, **caractérise en ce qu'**on combine des substances inorganiques séparables par voie magnétique à la biomasse dans le liquide clarifié de l'étape d'activation, on les mélange et on les sédimente dans des récipients séparés de sédimentation

3. Procédé selon l'une quelconque des revendications 1 ou 2, **caractérisé en ce qu'**on élimine par sédimentation hors du mélange de la biomasse et des substances inorganiques séparables par voie magnétique, seulement une fraction, de préférence, correspondant à la quantité en excès de bornes activées, éventuellement on la déshydrate et on l'évacue, et on remet la majeure partie en circulation dans une étape d'activation.

4. Procédé selon l'une quelconque des revendications 1 à 3, **caractérisé en ce qu'**on met en oeuvre, comme substance inorganique séparable par voie magnétique, de la magnétite.

5. Procédé selon l'une quelconque des revendications 1 à 4, **caractérisé en ce qu'**on met en oeuvre de la magnétite ayant une granulométrie inférieure à 10 $\mu$m.

FIG. 1

FIG.4